(19) Europäisches Patentamt / European Patent Office / Office européen des brevets

(11) **EP 4 029 765 A1**

(12) **DEMANDE DE BREVET EUROPEEN**

(43) Date de publication:
   **20.07.2022   Bulletin 2022/29**

(21) Numéro de dépôt: **21215834.9**

(22) Date de dépôt: **20.12.2021**

(51) Classification Internationale des Brevets (IPC):
   ***B62D 25/20*** (2006.01)   ***B60N 2/015*** (2006.01)
   ***B60N 2/005*** (2006.01)   ***B62D 21/15*** (2006.01)
   ***B60R 22/22*** (2006.01)   ***B60N 2/00*** (2006.01)

(52) Classification Coopérative des Brevets (CPC):
   **B62D 25/20; B60N 2/005; B60R 22/22**

(84) Etats contractants désignés:
   **AL AT BE BG CH CY CZ DE DK EE ES FI FR GB
   GR HR HU IE IS IT LI LT LU LV MC MK MT NL NO
   PL PT RO RS SE SI SK SM TR**
   Etats d'extension désignés:
   **BA ME**
   Etats de validation désignés:
   **KH MA MD TN**

(30) Priorité:   **18.01.2021   FR 2100455**

(71) Demandeur: **Renault s.a.s**
   **92100 Boulogne Billancourt (FR)**

(72) Inventeurs:
   • **FOUBERT, VINCENT**
     **78084 GUYANCOURT CEDEX (FR)**
   • **HLUBINA, Thierry**
     **78084 guyancourt cedex (FR)**
   • **OLIVIER, Louis**
     **78084 guyancourt cedex (FR)**

(74) Mandataire: **Renault Group**
   **Renault s.a.s.**
   **API : TCR GRA 2 36**
   **1, Avenue du Golf**
   **78084 Guyancourt Cedex (FR)**

(54)   **POUTRE DE RENFORT D' ANCRAGE DE SIÈGES ET VÉHICULE AUTOMOBILE ASSOCIÉ**

(57)   La poutre (13) de renfort d'ancrage pour sièges de véhicule automobile comprend un point d'ancrage (12) des sièges.

La section (S1) de la poutre est variable selon une direction longitudinale (x) de la poutre de sorte que lorsqu'un effort ($\vec{F}$) est appliqué au point d'ancrage, la contrainte en flexion de chaque section de la poutre soit constante.

Fig 6

EP 4 029 765 A1

**Description**

La présente invention concerne les éléments d'ancrage de sièges pour un véhicule automobile, et plus particulièrement une poutre de renfort d'ancrage pour sièges et un véhicule comprenant une telle poutre de renfort.

Les ceintures de sécurité équipant des véhicules automobiles retiennent les passagers sur leur siège lors de chocs subis par les véhicules, et sont généralement fixées aux sièges, les sièges étant solidarisés à des éléments d'ancrage du véhicule tels que des éléments de carrosserie ou des éléments de châssis du véhicule.

Les efforts auxquels les ceintures de sécurité et les éléments d'ancrage du véhicule doivent résister en cas de chocs sont imposés par des textes réglementaires, lesdits textes imposant en outre des valeurs de déformations mécaniques des éléments d'ancrage lors desdits chocs.

Des sièges de véhicule peuvent être reliés entre eux et fixés au véhicule par un point d'ancrage central, notamment les sièges de troisième rangée.

Afin de respecter les contraintes d'efforts et de déformations édictées par les textes réglementaires, le point d'ancrage central doit présenter une raideur suffisante pour satisfaire auxdites contraintes.

Afin d'obtenir une raideur suffisante du point d'ancrage central, une poutre de renfort, généralement en acier, est intégrée sous le plancher du véhicule selon une direction transversale du véhicule, la poutre de renfort reliant le point d'ancrage central à des zones de raideur importante telles que les longerons latéraux du véhicule.

Une autre solution consiste à relier le point d'ancrage central aux traverses du châssis par la poutre de renfort disposée selon une direction longitudinale du véhicule, sous le plancher du véhicule.

La poutre de renfort est généralement surdimensionnée alourdissant le véhicule de sorte que la consommation de carburant du véhicule augmente entraînant une augmentation des émissions de polluants, tels que le dioxyde de carbone, ou de sorte que la consommation d'énergie électrique d'un véhicule hybride ou électrique augmente.

Il est donc proposé de pallier tout ou partie des inconvénients précités et, en particulier, de diminuer la masse de la poutre de renfort.

Au vu de ce qui précède, l'invention propose une poutre de renfort d'ancrage pour sièges de véhicule automobile comprenant un point d'ancrage des sièges.

La section de la poutre est variable selon une direction longitudinale de la poutre de sorte que lorsqu'un effort est appliqué au point d'ancrage, la contrainte en flexion de chaque section de la poutre soit constante.

Selon une caractéristique, la section de la poutre est définie par sa hauteur et sa largeur, la hauteur de la poutre étant variable.

De préférence, la poutre est évidée en son centre.

L'invention a également pour objet un véhicule automobile comprenant une poutre de renfort d'ancrage telle que définie précédemment, et au moins un siège, le siège étant fixé au point d'ancrage de la poutre.

De préférence, chaque extrémité de la poutre est reliée à un élément structurel du châssis du véhicule.

Selon une caractéristique, la longueur de la poutre est orientée selon une direction transversale du véhicule.

Avantageusement, chaque extrémité de la poutre est reliée à un longeron latéral différent du véhicule.

Selon une autre caractéristique, la longueur de la poutre est orientée selon une direction longitudinale du véhicule.

De préférence, chaque extrémité de la poutre est reliée à une traverse différente du véhicule

D'autres buts, caractéristiques et avantages de l'invention apparaîtront à la lecture de la description suivante, donnée uniquement à titre d'exemple non limitatif, et faite en référence aux dessins annexés sur lesquels :

[Fig 1] illustre schématiquement un véhicule automobile selon l'invention,
[Fig 2] illustre schématiquement une troisième rangée de sièges du véhicule automobile selon l'invention,
[Fig 3]

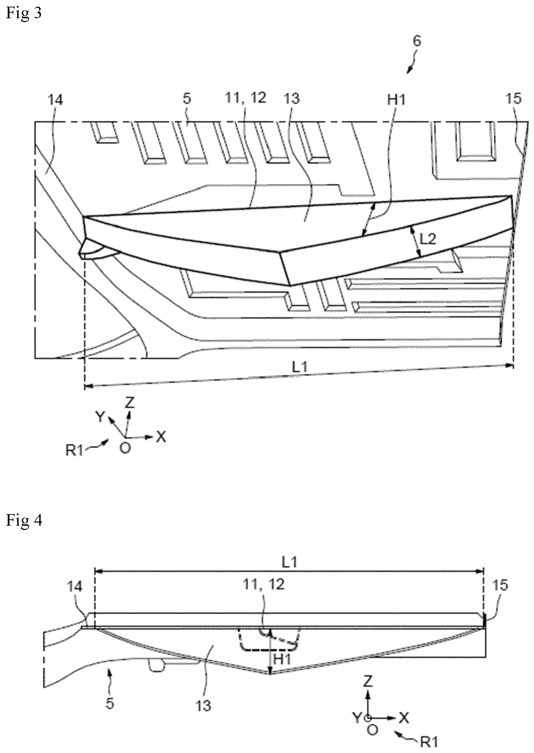

[Fig 4] illustrent schématiquement le plancher du véhicule automobile selon l'invention,

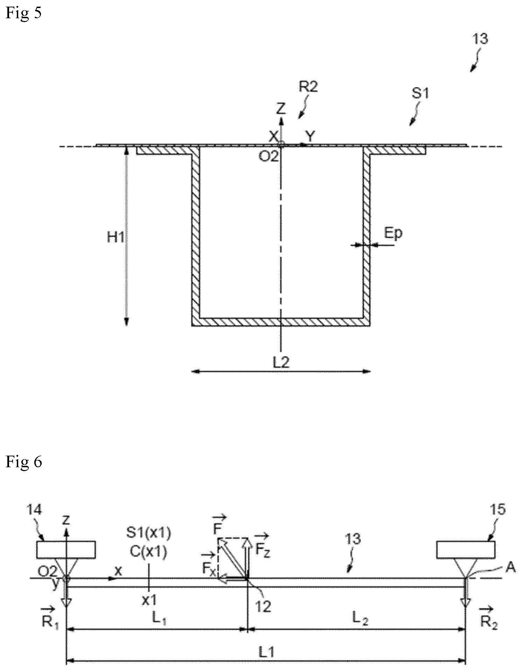

[Fig 5] illustre schématiquement une section d'une poutre de renfort d'ancrage selon l'invention,
[Fig 6] illustre un exemple d'un modèle de dimensionnement de la poutre de renfort d'ancrage selon l'invention, et

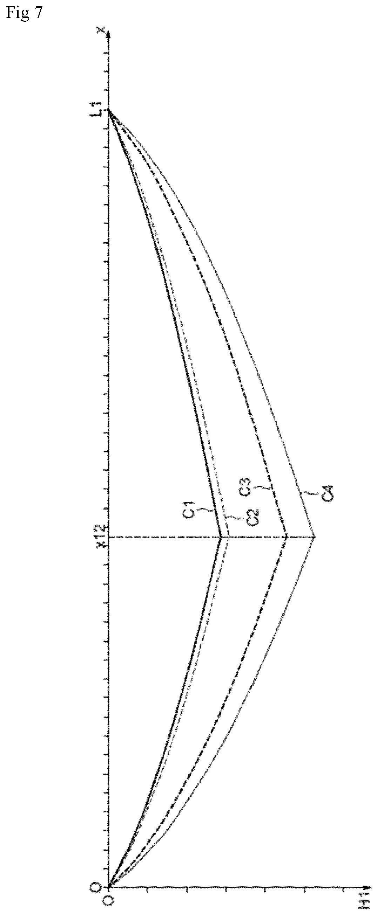

[Fig 7] illustre des exemples de profils longitudinaux de poutre de renfort d'ancrage selon l'invention.

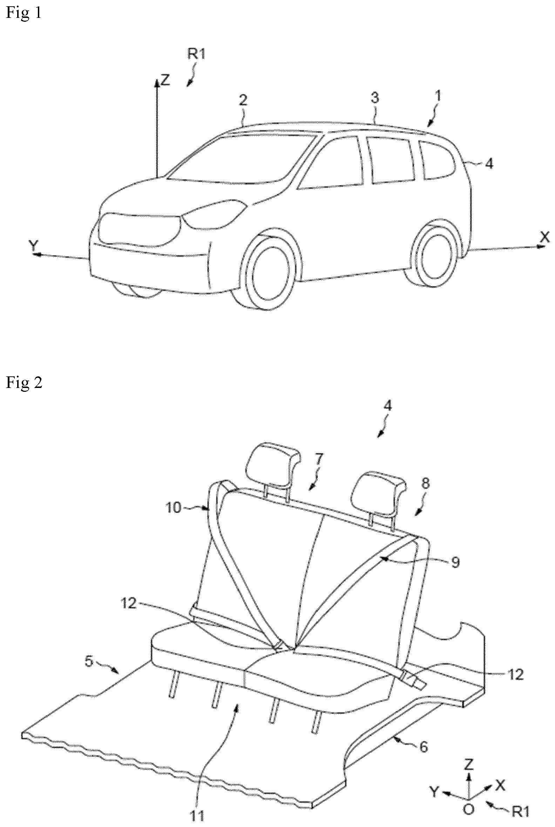

La figure 1 illustre un véhicule automobile 1 orienté selon un repère R1(O, X, Y, Z) orthonormé direct.

Le repère R1 comprend une origine O, un premier axe X orienté selon une direction avant-arrière du véhicule 1, un deuxième axe Y selon une direction transversale du véhicule orienté vers la droite du véhicule 1 selon le sens de roulage normal du véhicule 1, et un troisième axe Z selon une direction verticale du véhicule.

Le véhicule 1 comprend une première rangée de sièges 2 située dans le poste de conduite du véhicule, une deuxième rangée de sièges 3 et une troisième rangée de sièges 4 située à l'arrière du véhicule 1.

La figure 2 illustre la troisième rangée de sièges 4 fixée sur le plancher 5 du châssis 6 du véhicule 1.

La troisième rangée de sièges 4 comprend deux sièges 7, 8 comprenant chacun une ceinture de sécurité 9, 10.

EP 4 029 765 A1

Les sièges 7, 8 sont reliés entre eux et fixés au planche 5 en différents points du véhicule 1.

Les deux sièges 7, 8 sont notamment fixés au plancher 5 par un point de fixation centrale 11 disposé entre les deux sièges 7, 8, une boucle de fermeture 12 de chaque ceinture 9, 10 étant reliée au point de fixation centrale 11.

Lors d'un choc subi par le véhicule 1, les ceintures 9, 10 retiennent les passagers assis sur les sièges 7, 8, et transmettent notamment l'effort résultant du maintien des passagers sur leur siège au point de fixation centrale 10.

On se réfère aux figures 3 et 4 qui illustrent respectivement une vue partielle et une vue longitudinale du dessous du plancher 5 du véhicule 1 située sous la troisième rangée de sièges 4.

On retrouve le point de fixation centrale 11 du plancher 5 confondu avec un point d'ancrage 12 disposé sur une poutre de renfort d'ancrage 13.

La poutre 13 de longueur L1, de hauteur H1 et de largeur constante L2 est typiquement en forme d'ogive aplatie, comme cela résulte des équations présentées ci-après.

La hauteur H1 de la poutre 13 est variable selon la direction longitudinale de la poutre de sorte que la section S1 de la poutre, définie par le produit de la hauteur variable H1 par la largeur L2, soit variable selon la direction longitudinale de la poutre 13.

La longueur de la poutre est orientée selon le premier axe X du repère R1.

Chaque extrémité de la poutre 13 est reliée à un élément structurel différent du châssis 5, par exemple à des traverses 14, 15 du châssis 5.

Selon un autre mode de réalisation, la longueur L1 de la poutre 13 est orientée selon le deuxième axe Y du repère R1, chaque extrémité de la poutre étant par exemple reliée à un longeron latéral différent du véhicule 1.

La section de la poutre 13 est déterminée de sorte que lorsqu'un effort F est appliqué au point d'ancrage 12, la contrainte de flexion subie par chaque section S1 de la poutre soit constante, l'effort F étant par exemple l'effort édicté par les textes réglementaires.

La contrainte en flexion est par exemple choisie égale à la limite élastique du matériau employé pour réaliser la poutre 13 et de sorte que la valeur maximale de la flèche de la poutre sous l'effort F soit compatible avec les textes réglementaires.

Les textes réglementaires comprennent par exemple le règlement européen ECE14.

A présent est détaillé un exemple de procédé de dimensionnement de la poutre 13.

La figure 5 illustre un exemple de la section S1 de la poutre 13.

La poutre 13, généralement en acier, est par exemple évidée en son centre et réalisée par emboutissage d'une feuille de tôle d'épaisseur Ep, la section S1 de la poutre étant rectangulaire.

La poutre 13 est orientée selon un deuxième repère R2, le deuxième repère orthonormé R2 comprenant une origine O2, un premier axe x, un deuxième axe y et une troisième axe z confondus respectivement avec le premier, deuxième et troisième axes X, Y, Z du premier repère R1, l'origine O2 du deuxième repère R2 étant un point de liaison de la poutre 11 avec une première traverse 14 et appartenant à un plan de symétrie de la section de la poutre.

La figure 6 illustre un exemple d'un modèle de dimensionnement de la poutre 13 lorsque l'effort F est appliqué au point d'ancrage 12.

Le point d'ancrage 12 est situé à une première distance $L_1$ de l'origine O2 et à une deuxième distance $L_2$ d'un point A de la deuxième traverse 15, la longueur L1 étant égale à la somme des première et deuxième distances $L_1$, $L_2$, le point A étant un point de liaison de la poutre 13 avec la deuxième traverse 15.

L'effort F est modélisé par le vecteur $\vec{F}$ comprenant une composante horizontale $\overrightarrow{F_X}$ selon le premier axe x du deuxième repère R2, la composante horizontale étant orientée vers l'avant du véhicule 1, et une composante verticale $\overrightarrow{F_Z}$ orientée selon le troisième axe z du deuxième repère.

Comme la composante verticale $\overrightarrow{F_Z}$ est prépondérante pour le dimensionnement de la poutre 13 par rapport à la composante horizontale $\overrightarrow{F_X}$, la composante horizontale $\overrightarrow{F_X}$ est négligée.

La poutre 13 est soumise en outre aux efforts de réaction $\overrightarrow{R_1}$ et $\overrightarrow{R_2}$ situés aux points O2 et A.

Le moment d'inertie $I_{O2y}$ de la poutre 13 au point O2 par rapport au deuxième axe y du deuxième repère R2 est égal à :

$$I_{O2y} = \frac{2}{3}E_P{H_1}^3 + (L2 - 2E_P)E_P\,H1^2 \quad (1)$$

Le moment fléchissant $M_{fc}$ à un point C de coordonnée x1 appartenant à la section S1(x1) selon le premier axe x du deuxième repère R2 s'écrit :

$$M_{fc}(x1) = \frac{-F_z \cdot L_2}{L1} x1 \text{ pour } 0 < x1 < L_1 \quad (2),$$

et

$$M_{fc}(x1) = \frac{-F_z \cdot L_1}{L1}(L1 - x1) \text{ pour } L_1 < x1 < L1 \quad (3)$$

La contrainte de flexion $\sigma_x$ au point C(x1) de la section S1(x1) en fonction du moment fléchissant $M_{fc}$ est égale à :

$$\sigma_x = \frac{-M_{fc}}{I_{O2y}} H1 \quad (4)$$

Comme la contrainte en flexion $\sigma_x$ est égale à la limite élastique $\sigma_x max$ du matériau utilisé pour réaliser la poutre 13, on pose :

$$\sigma_x = \sigma_x max \quad (5)$$

En remplaçant le moment d'inertie $I_{O2y}$ et le moment fléchissant $M_{fc}$ par leur expression dans l'équation (4), et en négligeant le terme $Ep^2 H_1^2$ lors de développement du moment d'inertie $I_{O2y}$, on obtient les équations suivantes :

$$H1^2 + \frac{3}{2}L2H1 - \frac{3F_z L_2}{2L1 E_p \sigma_{xmax}} x1 = 0 \text{ pour } 0 < x1 < L_1 \quad (6)$$

$$H1^2 + \frac{3}{2}L2H1 - \frac{3F_z L_1}{2L1 E_p \sigma_{xmax}}(L1 - x1) = 0 \text{ pour } L_1 < x1 < L1 \quad (7)$$

En résolvant les équations (6) et (7), et en conservant les solutions physiques, on obtient la hauteur H1 selon x1 de sorte que la contrainte en flexion $\sigma_x$ de chaque section S1(x1) de la poutre soit constante et égale à la limite élastique $\sigma_x max$ pour l'effort verticale $F_z$ :

$$H1(x1) = \frac{3}{4}\sqrt{L2^2 + \frac{8F_z L_2 x1}{3L1 E_p \sigma_{xmax}}} - \frac{3}{4}L2 \text{ pour } 0 \text{ pour } 0 < x1 < L_1 \quad (8)$$

$$H1(x1) = \frac{3}{4}\sqrt{L2^2 + \frac{8F_z L_1(L1 - x1)}{3L1 E_p \sigma_{xmax}}} - \frac{3}{4}L2 \text{ pour } L_1 < x1 < L1 \quad (9)$$

La figure 7 illustre des exemples de profils longitudinaux C1, C2, C3, C4 de poutre 13 en fonction du premier axe x du deuxième repère R2 pour des épaisseurs de tôle Ep différentes selon un ordre décroissant, le profil C1 ayant l'épaisseur de tôle la plus importante et le profil C4 ayant l'épaisseur de tôle la plus faible.
On constate que la valeur la plus importante de la hauteur H1 de la poutre 13 est atteinte au point de coordonnée x12 du point d'ancrage 12.
Le dimensionnement de la poutre de renfort d'ancrage comme décrit précédemment permet de remplir des prescriptions réglementaires concernant les ancrages de sièges tout en diminuant la masse de ladite poutre de sorte que la véhicule 1 soit allégée.
Le véhicule 1 consomme moins d'énergie pour assurer son roulage.
Lorsque la longueur L1 de la poutre 13 est orientée selon le deuxième axe Y du repère R1, les points O2 et A sont remplacés par des points de liaison de la poutre 13 avec des premier et deuxième longerons latéraux du véhicule 1.

**Revendications**

1. Poutre (13) de renfort d'ancrage pour sièges (7, 8) de véhicule automobile (1) comprenant un point d'ancrage (12) des sièges, **caractérisée en ce que** la section (S1) de la poutre est variable selon une direction longitudinale (x) de la poutre de sorte que lorsqu'un effort ($\vec{F}$) est appliqué au point d'ancrage, la contrainte en flexion ($\sigma_x$) de chaque section de la poutre soit constante.

2. Poutre selon la revendication 1, dans laquelle la section (S1) de la poutre (13) est définie par sa hauteur (H1) et sa largeur (L2), la hauteur de la poutre étant variable.

3. Poutre selon l'une des revendications 1 et 2, comprenant une poutre (13) évidée en son centre.

4. Véhicule automobile (1) comprenant une poutre (13) de renfort d'ancrage selon l'une quelconques des revendications 1 à 3, et au moins un siège (7, 8), le siège étant fixé au point d'ancrage de la poutre.

5. Véhicule selon la revendication 4, dans lequel chaque extrémité (O2, A) de la poutre (13) est reliée à un élément structurel (12, 13) du châssis (6) du véhicule.

6. Véhicule selon l'une des revendications 4 et 5, dans lequel la longueur (L1) de la poutre (13) est orientée selon une direction transversale (Y) du véhicule.

7. Véhicule selon la revendication 6, chaque extrémité de la poutre étant reliée à un longeron latéral différent du véhicule.

8. Véhicule selon l'une des revendications 4 et 5, dans lequel la longueur (L1) de la poutre (13) est orientée selon une direction longitudinale (X) du véhicule.

9. Véhicule selon la revendication 8, chaque extrémité de la poutre étant reliée à une traverse (14, 15) différente du véhicule.

Fig 1

Fig 2

Fig 3

Fig 4

Fig 5

Fig 6

Fig 7

Europäisches
Patentamt

European
Patent Office

Office européen
des brevets

**RAPPORT DE RECHERCHE EUROPEENNE**

Numéro de la demande

**EP 21 21 5834**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DE 10 2019 121705 A1 (SUZUKI MOTOR CORP [JP]) 13 février 2020 (2020-02-13) * figures 4d, 5a-5d * * alinéas [0019], [0033] - [0036] * ----- | 1-9 | INV. B62D25/20 B60N2/015 B60N2/005 B62D21/15 |
| A | FR 3 095 633 A1 (PSA AUTOMOBILES SA [FR]) 6 novembre 2020 (2020-11-06) * figure 2 * * alinéa [0016] * ----- | 1-9 | B60R22/22 B60N2/00 |
| A | KR 2013 0031949 A (HYUNDAI MOTOR CO LTD [KR]) 1 avril 2013 (2013-04-01) * figure 4 * ----- | 1-9 | |
| A | JP 2012 001023 A (UNIPRES CORP) 5 janvier 2012 (2012-01-05) * figures * ----- | 1-9 | |
| A | WO 2016/104078 A1 (NIPPON STEEL & SUMITOMO METAL CORP [JP]) 30 juin 2016 (2016-06-30) * figure 1 * ----- | 1-9 | |

DOMAINES TECHNIQUES RECHERCHES (IPC)

**B60N**
**B62D**

Le présent rapport a été établi pour toutes les revendications

| Lieu de la recherche | Date d'achèvement de la recherche | Examinateur |
|---|---|---|
| **La Haye** | **9 mai 2022** | **Thiercelin, A** |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.....................................................................
& : membre de la même famille, document correspondant

EPO FORM 1503 03.82 (P04C02)

**EP 4 029 765 A1**

## ANNEXE AU RAPPORT DE RECHERCHE EUROPEENNE
## RELATIF A LA DEMANDE DE BREVET EUROPEEN NO.

**EP 21 21 5834**

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**09-05-2022**

| Document brevet cité au rapport de recherche | Date de publication | Membre(s) de la famille de brevet(s) | Date de publication |
|---|---|---|---|
| DE 102019121705 A1 | 13-02-2020 | CN 210852667 U | 26-06-2020 |
| | | DE 102019121705 A1 | 13-02-2020 |
| | | FR 3084871 A1 | 14-02-2020 |
| | | JP 2020026234 A | 20-02-2020 |
| FR 3095633 A1 | 06-11-2020 | AUCUN | |
| KR 20130031949 A | 01-04-2013 | AUCUN | |
| JP 2012001023 A | 05-01-2012 | JP 5534966 B2 | 02-07-2014 |
| | | JP 2012001023 A | 05-01-2012 |
| WO 2016104078 A1 | 30-06-2016 | BR 112017012652 A2 | 26-12-2017 |
| | | CA 2969555 A1 | 30-06-2016 |
| | | CN 107107968 A | 29-08-2017 |
| | | EP 3219589 A1 | 20-09-2017 |
| | | ES 2824509 T3 | 12-05-2021 |
| | | JP 6488487 B2 | 27-03-2019 |
| | | JP WO2016104078 A1 | 14-09-2017 |
| | | KR 20170097744 A | 28-08-2017 |
| | | RU 2672005 C1 | 08-11-2018 |
| | | TW 201632386 A | 16-09-2016 |
| | | US 2017349217 A1 | 07-12-2017 |
| | | WO 2016104078 A1 | 30-06-2016 |

EPO FORM P0460